# EUROPEAN PATENT APPLICATION

(11) **EP 4 092 545 A1**
(43) Date of publication of application: **23.11.2022**
(21) Application number: 21888284.3
(22) Date of filing: 07.09.2021
(51) Int. Cl.: G06F 16/9535, G06K 9/62

(54) **CONTENT RECOMMENDATION METHOD AND DEVICE**

(30) Priority: 03.11.2020 CN 202011206827
(71) Applicant: Beijing Dajia Internet Information Technology Co., Ltd., Beijing 100085 (CN)
(72) Inventor: LI, Xuanping, Beijing 100085 (CN); LI, Yan, Beijing 100085 (CN); LIANG, Xiao, Beijing 100085 (CN)
(74) Representative: Vossius & Partner Patentanwälte Rechtsanwälte mbB
(86) International application number: PCT/CN2021/117034
(87) International publication number: WO 2022/095585

(57) **Abstract**

A content recommendation method. Said method comprises: acquiring content cover images corresponding to multiple pieces of content accessed by a user account; acquiring cover image features of the multiple content cover images, and determining user account features of the user account according to the cover image features of the multiple content cover images; on the basis of cover image features of content to be recommended and the user account features, determining an access probability value of the user account accessing the content to be recommended; and providing, according to the access probability value, the content to be recommended to the user account.

## Description

### CROSS-REFERENCE TO RELATED APPLICATIONS

The present application is based on and claims the benefit of priority to Chinese Application NO. 202011206827.X, filed on November, 3, 2020, the disclosures of which are herein incorporated by reference in their entireties.

### TECHNICAL FIELD

The present disclosure relates to the field of computer technologies, and in particular, to a method for content recommendation, device, electronic equipment, and storage medium.

### BACKGROUND

With the rapid development of Internet technology, users can access pictures, videos, music and other content provided by the Internet through mobile phones, laptops and other electronic equipment.

When users browse the content provided by the Internet, appropriate content is recommended to the corresponding target users based on the user behavior data accumulated previously.

### SUMMARY

According to a first aspect of the embodiments of the present disclosure, there is provided a method for method for content recommendation, including:
obtaining a plurality of content cover images corresponding to a plurality of contents accessed by a user account; obtaining a cover image feature of the plurality of content cover images, and determining a user account feature of the user account based on the cover image feature of the plurality of content cover images; determining an access probability value of the user account accessing a content to be recommended based on the cover image feature of the content to be recommended and the user account feature; providing the content to be recommended to the user account based on the access probability value.

In some embodiments, said determining the user account feature of the user account based on the cover image feature of the plurality of content cover image includes: obtaining a fused feature by performing fusion processing on the cover image feature of the plurality of content cover images; and determining the user account feature of the user account as the fused feature.

In some embodiments, said obtaining the fused feature by performing fusion processing on the cover image feature of the plurality of content cover images includes: obtaining a weight value corresponding to the cover image feature of each of the content cover images; performing weighted processing on the cover image feature of each of the content cover images based on the weight value; obtaining the fused feature by performing fusion processing on the cover image feature of each of the content cover images.

In some embodiments, said obtaining the weight value corresponding to the cover image feature of each of the content cover images includes: obtaining a feature similarity between the cover image feature of each of the content cover images and the cover image feature of the content to be recommended respectively; and determining the weight value corresponding to the cover image feature of each of the content cover images based on each feature similarity.

In some embodiments, said obtaining the cover image feature of the plurality of content cover images includes: obtaining initial cover image feature of the plurality of content cover images by performing feature extraction processing on the plurality of content cover images; determining a content similarity between first content and second content based on the initial cover image features of the plurality of content cover images, where the first content and the second content include any two contents in the plurality of contents; and adjusting the initial cover image feature of the first content and the initial cover image feature of the second content, such that the feature similarity obtained after adjustment between the cover image feature of the first content and the cover image feature of the second content is matched with the content similarity.

In some embodiments, the content to be recommended have a plurality of contents to be recommended, and said providing the content to be recommended to the user account based on the access probability value includes: sorting the plurality of contents to be recommended according to the access probability value; selecting N contents to be recommended from the sorted plurality of contents to be recommended as target contents, where, a minimum value of the access probability value of the target contents selected is greater than a maximum value of the access probability value of the target contents unselected, and N is a positive integer greater than or equal to 1; and providing the target contents to the user account.

In some embodiments, said providing the content to be recommended to the user account based on the access probability value includes: obtaining a content recommendation threshold corresponding to the user account; and providing the content to be recommended to the user account, in response to determining that the access probability value is greater than the content recommendation threshold.

According to a second aspect of the embodiments of the present disclosure, there is provided a method for video recommendation, including: obtaining a plurality of video cover images corresponding to a plurality of videos accessed by a user account; obtaining a cover image feature of the plurality of video cover images, and determining a user account feature of the user account based on the cover image feature of the plurality of video cover images; determining an access probability value of the user account accessing a video to be recommended based on the cover image feature of the video to be recommended and the user account feature; and providing the video to be recommended to the user account based on the access probability value.

According to a third aspect of the embodiments of the present disclosure, there is provided a device for content recommendation, including: a first obtaining unit, configured to perform obtaining a plurality of content cover images corresponding to the plurality of contents accessed by a user account; a first feature determination unit, configured to perform obtaining a cover image feature of the plurality of content cover images and determining a user account feature of the user account based on the cover image feature of the plurality of content cover images; a first probability value obtaining unit, configured to determine an access probability value of the user account accessing a content to be recommended based on the cover image feature of the content to be recommended and the user account feature; and a first recommendation unit, configured to perform providing the content to be recommended to the user account based on the access probability value.

In some embodiments, the first feature determination unit is specifically configured to perform obtaining a fused feature by performing fusion processing on the cover image feature of the plurality of content cover images; and determining the user account feature of the user account as the fused feature as the user account feature of the user account.

In some embodiments, the first feature determination unit is specifically configured to perform obtaining a weight value corresponding to the cover image feature of each of the content cover images; performing weighted processing on the cover image feature of each of the content cover images based on the weight value; and obtaining the fused feature by performing fusion processing on the cover image feature of each of the content cover images.

In some embodiments, the first feature determination unit is specifically configured to perform obtaining a feature similarity between the cover image feature of each of the content cover images and the cover image feature of the content to be recommended respectively; and obtaining the weight value corresponding to the cover image feature of each of the content cover images based on each feature similarity.

In some embodiments, the first obtaining unit is specifically configured to perform obtaining initial cover image feature of the plurality of content cover images by performing feature extraction processing on the plurality of content cover images; determining a content similarity between first content and second content based on the initial cover image features of the plurality of content cover images, where the first content and the second content include any two contents in the plurality of contents; and adjusting the initial cover image feature of the first content and the initial cover image feature of the second content, such that the feature similarity obtained after adjustment between the cover image feature of the first content and the cover image feature of the second content is matched with the content similarity.

In some embodiments, the content to be recommended have a plurality of contents to be recommended, and the first recommendation unit is specifically configured to perform sorting the plurality of contents to be recommended according to the access probability value; selecting N contents to be recommended from the sorted plurality of contents to be recommended as target contents, where, a minimum value of the access probability value of the target contents selected is greater than a maximum value of the access probability value of the target contents unselected, and N is a positive integer greater than or equal to 1; and providing the target contents to the user account.

In some embodiments, the first recommendation unit is specifically configured to perform obtaining a content recommendation threshold corresponding to the user account; and providing the content to be recommended to the user account, in response to determining that the access probability value is greater than the content recommendation threshold.

According to a fourth aspect of the embodiments of the present disclosure, there is provided a device for video recommendation, including: a second obtaining unit, configured to perform obtaining a plurality of video cover images corresponding to a plurality of videos accessed by a user account; a second feature determination unit, configured to perform obtaining a cover image feature of the plurality of video cover images and determining a user account feature of the user account based on the cover image feature of the plurality of video cover images; a second probability value obtaining unit, configured to determining an access probability value of the user account accessing a video to be recommended based on the cover image feature of the video to be recommended and the user account feature; and a second recommendation unit, configured to perform providing the video to be recommended to the user account based on the access probability value.

According to a fifth aspect of the embodiments of the present disclosure, there is provided a server, including a memory and a processor. The memory stores a computer program. When the processor executes the computer program, it implements the method for content recommendation described in the first aspect or any possible implementation of the first aspect, and the method for video recommendation described in the second aspect.

According to a sixth aspect of the embodiments of the present disclosure, there is provided a storage medium on which a computer program is stored. When the computer program is executed by a processor, it implements the method for content recommendation described in the first aspect or any possible implementation of the first aspect, and the method for video recommendation described in the second aspect.

According to a seventh aspect of the embodiments of the present disclosure, there is provided a computer program product including a computer program. The computer program is stored in a readable storage medium, and at least one processor of an equipment reads and executes the computer program from the readable storage medium, so that the equipment executes the method for content recommendation described in the first aspect or any possible implementation of the first aspect, and the method for video recommendation described in the second aspect.

Through the technical solution provided by the embodiments of the present disclosure, the user account feature used to represent the personalized preferences of the user account may be encode accurately based on the image features of the content cover images corresponding to a plurality of contents accessed by the user account, and then the access probability of the user account accessing the content to be recommended may be determined based on the user account features and the cover image features of the content to be recommended. Thus, it can be accurately determined that the content to be recommended is provided to the user account without using the user behavior data accumulated by the content to be recommended.

### BRIEF DESCRIPTION OF THE DRAWINGS

Fig. 1 is an application environment diagram of a method for content recommendation according to an embodiment.
Fig. 2 is a flow chart of a method for content recommendation according to an embodiment.
Fig. 3 is a schematic diagram of a network structure of an attention mechanism layer according to an embodiment.
Fig. 4 is a flowchart showing another method for content recommendation according to an embodiment.
Fig. 5 is a flowchart of a method for video recommendation according to an embodiment.
Fig. 6 is a schematic diagram of a network structure of a video recommendation model in a video recommendation scenario, according to an embodiment.
Fig. 7 is a block diagram of a device for content recommendation according to an embodiment.
Fig. 8 is a block diagram of a device for video recommendation according to an embodiment.
Fig. 9 is an internal structure diagram of a server according to an embodiment.

### DETAILED DESCRIPTION

In order to make those skilled in the art better understand the technical solutions of the present disclosure, the technical solutions in the embodiments of the present disclosure will be clearly and completely described below with reference to the accompanying drawings.

It should be noted that the terms "first", "second" and the like in the description and claims of the present disclosure and the above drawings are used to distinguish similar objects, and are not necessarily used to describe a specific sequence or sequence. It is to be understood that the data so used may be interchanged under appropriate circumstances such that the embodiments of the disclosure described herein can be implemented in sequences other than those illustrated or described herein. The implementations described in the illustrative examples below are not intended to represent all implementations consistent with this disclosure. On the contrary, they are only examples of devices and methods consistent with some aspects of the present disclosure as detailed in the appended claims.

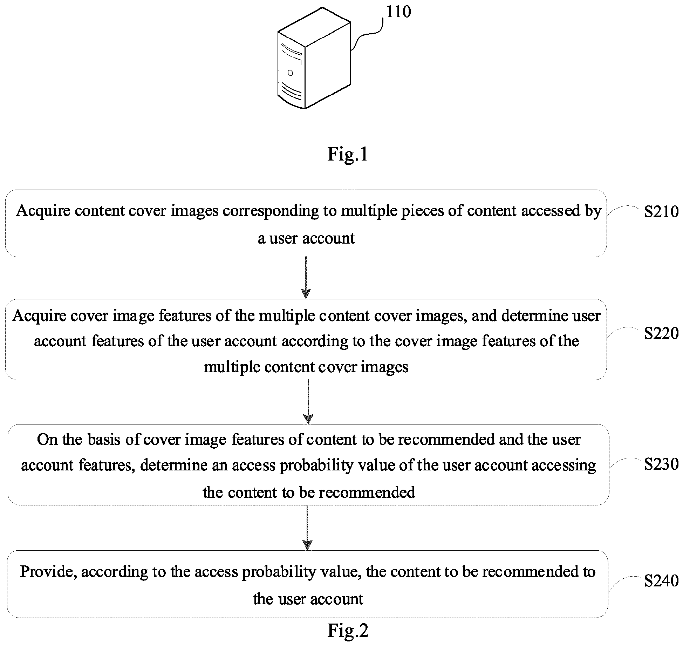

The method for content recommendation provided by the present disclosure can be applied to the application environment shown in Fig. 1. Where, firstly, the recommendation server 110 obtains content cover images corresponding to a plurality of contents accessed by a user account; then, the recommendation server 110 obtains the cover image features of the plurality of content cover images, and determines a user account feature of the user account based on the cover image features of the plurality of content cover images; and then, the recommendation server 110 determines an access probability value of the user account accessing a content to be recommended based on the cover image feature of the content to be recommended and the user account feature; finally, The recommendation server 110 provides the content to be recommended to the user account based on the access probability value. In practical applications, the recommendation server 110 may be implemented as an independent server or a server cluster composed of a plurality of servers.

Fig. 2 is a flow chart of a method for content recommendation according to an embodiment. As shown in Fig. 2, the method for content recommendation is used in the recommendation server 110 of Fig. 1 and includes the following steps.

In S210, content cover images corresponding to a plurality of contents accessed by the user account are obtained.

In some embodiments, the contents may refer to multimedia contents used to be provided to the user account, such as short videos, videos, news, articles (e.g. official account tweets), multimedia advertisements, e-books, songs and albums, etc.

In practical applications, the plurality of contents accessed by the user account may also be named as historically accessed contents.

In some embodiments, the content cover image may refer to a cover image corresponding to the content, such as short video cover image, article cover image, etc.

In a specific implementation, the recommendation server obtains content cover images corresponding to the plurality of contents accessed by the user account. For example, the recommendation server obtains short video cover images corresponding to X short videos clicked by a certain user account.

In some embodiments, X is a positive integer greater than 0.

In practical applications, the selection of the length of user's click history X has a great influence on the results. If X is small, the user's click list (content click list) has a large randomness and the user's preferences may not be captured; if X is large and the click list is too long, it will increase the difficulty of training. In practical applications, X may be equal to 20, that is, the content cover images corresponding to the contents of the last 20 clicks in the user's click history may be used, which can effectively express the user's personalized preference.

In S220, cover image features of the plurality of content cover images are obtained and user account feature of the user account is determined according to the cover image features of the plurality of content cover images.

In some embodiments, the cover image feature may refer to an image feature corresponding to the content cover image.

In some embodiments, the user account feature may refer to a corresponding feature used to represent the user account.

In specific implementation, after the recommendation server obtains content cover images corresponding to a plurality of contents, the recommendation server can perform feature extraction on each content cover image through a pre-trained image feature extraction network, and then obtain the cover image feature corresponding to each content cover image. In practical applications, the image feature extraction network may be a CNN visual feature extraction network.

In some embodiments, the CNN visual feature extraction network can adopt convolutional neural networks such as resnet50, VGG, inception, etc., and the last full connection layer is replaced with a dimension reduction layer, et., the full connection of 1024 dimensions to 32 dimensions. The CNN network adopts imagenet for pre-training, otherwise the network is difficult to converge.

Then, the recommendation server determines the user account feature of the user account according to the cover image features of the plurality of content cover images. Specifically, the recommendation server may input the cover image feature of each content cover image into a pre-trained user coding network, and perform fusion processing on the cover image feature of each content cover image through the pre-trained user coding network, and generate a user account feature corresponding to the user account. In practical applications, the recommendation server may adopt a user vector representation (e.g. user_embed) output by the pre-trained user coding network to represent the user account feature corresponding to the user account.

In S230, an access probability value of the user account accessing a content to be recommended is determined, based on the cover image feature of the content to be recommended and the user account feature.

In practical applications, the access probability value may also be named as content click-through rate (ctr).

In some embodiments, the cover image feature of the content to be recommended may refer to an image feature corresponding to the content cover image of the content to be recommended. In practical applications, the specific process of obtaining the image feature corresponding to the content cover image of the content to be recommended is similar to the specific process of obtaining the cover image features of the plurality of content cover images above, and will not be repeated here.

In specific implementation, after the recommendation server obtains the cover image feature of the content to be recommended and the user account feature corresponding to the user account, the recommendation server may input the cover image feature of the content to be recommended and user account feature into a pre-trained click-through rate prediction network; the cover image features of the content to be recommended and the user account feature corresponding to the user account are processed through the pre-trained click-through rate prediction network, and then the output result of the pre-trained click-through rate prediction network is taken as the access probability value of the user account accessing the content to be recommended.

In practical applications, the above pre-trained click-through rate prediction network may also be named as a CTR prediction network.

In some embodiments, the CTR prediction network may adopt a three-layer DNN (Deep-learning Neural Network) network, and train the loss by adopting a cross entropy loss function (SoftMax cross entropy loss). In order to train the network better, an optimal configuration scheme is selected by performing tuning tests in terms of Log sampling method, data enhancement, activation function, loss function, attention method, etc.

In S240, the content to be recommended is provided to the user account according to the access probability value.

In a specific implementation, after obtaining the access probability value of the user account accessing the content to be recommended, the recommendation server may provide the content to be recommended to the user account based on the access probability value. Specifically, the recommendation server may determine whether the access probability value is greater than a preset threshold or not. When the access probability value is greater than the preset threshold, the recommendation server provides the content to be recommended to the user account.

Of course, when there is a plurality of contents to be recommended, the recommendation server may sort each of the contents to be recommended based on the access probability values corresponding to each of the contents to be recommended, determine the target content from each of the contents to be recommended after being sorted, and provide the target content to the user account.

In the above method for content recommendation, the user account feature of the user account is determined according to the cover image features of a plurality of content cover images by acquiring content cover images corresponding to a plurality of contents accessed by the user account and acquiring the cover image features of the plurality of content cover images. The access probability value of the user account accessing the content to be recommended is determined based on the cover image feature of the content to be recommended and the user account feature. The content to be recommended is provided to the user account according to the access probability value. Thus, it may be realized to encode the user account features used to represent the personalized preferences of the user account based on the image features of the content cover images corresponding to the plurality of contents accessing by the user account. Then, the access probability of the account to access the content to be recommended may be determined based on the user account features and the cover image features of the content to be recommended, such that it may be accurately determined to provide the content to be recommended to the user account without using the user behavior data accumulated by the content to be recommended.

In an embodiment, determining the user account feature of the user account based on the cover image features of the plurality of content cover images includes: obtaining a fused feature by performing fusion processing on the cover image features of the plurality of content cover images, and determining the user account feature of the user account as the fused feature.

In a specific implementation, in the process that the recommendation server determines the user account features of the user account according to the cover image features of the plurality of content cover images, the following may be specifically included: the recommendation server may input the cover image feature of each of the content cover images into a pre-trained user coding network, and perform a series of fusion processing on the cover image feature of each of the content cover images through the pre-trained user coding network, and generate the user account feature corresponding to the user account. In practical applications, the recommendation server may adopt the user vector representation user embed output by the pre-trained user coding network to represent the user account feature corresponding to the user account.

In the technical solution of the embodiments in the present disclosure, the fused feature obtained by fusing the cover image features of the plurality of content cover images, is taken as the user account feature of the user account, such that the cover image feature corresponding to each of the content cover images may be fully considered, so as to obtain the user account feature used to characterize the user account accurately.

In an embodiment, obtaining the fused feature by performing fusion processing on the cover image feature of the plurality of content cover images includes: obtaining a weight value corresponding to the cover image feature of each of the content cover images; then, performing weighted processing on the cover image feature of each of the content cover images based on the weight value; and obtaining the fused feature by performing fusion processing on the cover image feature of each of the content cover images. In the process of obtaining a weight value corresponding to the cover image feature of each of the content cover images, the following are included: obtaining a feature similarity between the cover image feature of each of the content cover images and the cover image feature of the content to be recommended respectively; obtaining the weight value corresponding to the cover image feature of each of the content cover images based on each of the feature similarities.

In a specific implementation, in the process that the recommendation server performs fusion processing on cover image features of the plurality of content cover images to obtain the fused features, it may specifically include: the recommendation server may first obtain weight values corresponding to the cover image features of each of the content cover images. Specifically, the recommendation server may input the cover image feature of each of the content cover images into a pre-trained attention layer, obtain the feature similarity between the cover image feature of each of the content cover images and the cover image feature of the content to be recommended through the attention layer, and obtain the weight value corresponding to the cover image feature of each of the content cover images based on each feature similarity.

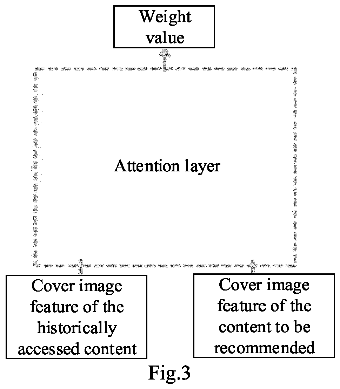

As shown in Fig. 3, Fig. 3 provides a schematic diagram of the network structure of the attention layer. The recommendation server inputs the cover image features of the historically accessed content and the cover image features of the content to be recommended into the pre-trained attention layer. The pre-trained attention layer calculates the feature similarity between the cover image features of the historically accessed content and the cover image features of the content the to-be-recommended, and determines the weight value corresponding to the cover image feature of the historically accessed content based on the feature similarity through a full connection processing and an activation function. Where, the weight value corresponding to the cover image feature of the historically accessed content is positively correlated with the feature similarity between the cover image feature of the historically accessed content and the cover image feature of the content to be recommended. The higher the similarity between the cover image of the historically accessed content and the cover image of the content to be recommended is, the greater the weight value corresponding to the cover image feature corresponding to the cover image of the historically accessed content.

Then, the recommendation server performs weighted processing on the cover image features of each of the content cover images based on the weight value, and performs fusion processing on the weighted cover image features of each of the content cover images to obtain the fused features, which are taken as the user account feature of the user account. In this way, the user account feature may represent the user's personalized preference accurately.

In the technical solution of this embodiment, in the process of obtaining the fused feature by performing fusion processing on the cover image feature of the plurality of content cover images, the feature similarity between the cover image feature of each of the content cover images and the cover image feature of the content to be recommended is obtained respectively, the weight value corresponding to the cover image feature of each of the content cover images is determined based on each feature similarity, and the cover image feature of each of the content cover images is weighted based on the weight value, such that the impact of noisy cover images in click history of the user account on the user coding results may be reduced effectively.

In an embodiment, said obtaining the cover image feature of the plurality of content cover images includes: obtaining initial cover image feature of the plurality of content cover images by performing feature extraction processing on the plurality of content cover images; determining a content similarity between first content and second content based on the initial cover image features of the plurality of content cover images; adjusting the initial cover image feature of the first content and the initial cover image feature of the second content, such that the feature similarity obtained after adjustment between the cover image feature of the first content and the cover image feature of the second content which is obtained after adjusting is matched with the content similarity.

Where, the first content and the second content are any two contents in the plurality of contents.

In a specific implementation, in the process that the recommendation server obtains the cover image features of the plurality of content cover images, it specifically includes: the recommendation server performs feature extraction processing on the plurality of content cover images to obtain initial cover image features of the plurality of content cover images, and determine the content similarity between the first content and the second content based on initial cover image features of the plurality of content cover images.

Specifically, in a user's click list (content click list), there may be a plurality of points of interest, and there may also be clicks that deviate from interest due to random/accidental events. Learning the correlation between the content cover images in the click list and suppressing the outlier noise data can help to judge the importance of the photo in the current click list, which is very important for feature learning.

In practical applications, the recommendation server can regard the user's click list as a sequence analogy, and regard the feature of each image as a word. In this way, it plays an important role in understanding the meaning of the sequence to learn the dependencies between each word and know which words are important. For example, users like three types of videos, such as movies, basketball, and football, and Multi-Head Attention can obtain this relationship from the click list by learning.

In the field of NLP (Natural Language Processing), there are many methods for processing sequence, similar to the Multi-Head Attention model, which can capture long-distance dependencies better. Specifically, the recommendation server can adopt the manner of self attention and Q=K=V=F (where Q, K, and V are input elements of the Multi-Head Attention model) for a vector F composed of X (click list length) cover image features stack, and calculate the relationship between the two contents, that is, the content similarity between the first content and the second content.

Then, the initial cover image feature of the first content and the initial cover image feature of the second content are adjusted, so that the feature similarity obtained after adjustment between the cover image feature of the first content and the cover image feature of the second content is matched with the content similarity, and the cover image features corresponding to the two historically accessed contents with similar contents are also similar.

In the technical solution of this embodiment, the initial cover image feature of the plurality of content cover images is obtained by performing feature extraction processing on the plurality of content cover images; the content similarity between first content and second content is determined based on the initial cover image features of the plurality of content cover images; finally, the initial cover image feature of the first content and the initial cover image feature of the second content is adjusted, such that the feature similarity obtained after adjustment between the cover image feature of the first content and the cover image feature of the second content is matched with the content similarity. In this way, it is possible to extract the plurality of points of interest in the user's content click list accurately, and identify clicks that deviate from interest due to randomness/accidentity accurately, and suppress the outlier noise data, and improve the accuracy with which the user account feature expresses the personalized preference of the user account.

In an embodiment, said providing the content to be recommended to the user account according to the access probability value includes: sorting the plurality of contents to be recommended according to the access probability value; selecting N contents to be recommended from the sorted plurality of contents to be recommended as target contents, where, the minimum value of the access probability value of the target contents selected is greater than the maximum value of the access probability value of the target contents unselected; and providing the target contents to the user account.

Among them, N is a positive integer greater than or equal to 1.

In the specific implementation, when there is a plurality of contents to be recommended, in the process of providing the content to be recommended to the user account based on the access probability value, the recommendation server may sort the plurality of contents to be recommended according to the access probability value to obtain each of the sorted contents to be recommended. Then the recommendation server may select N contents to be recommended from each of the sorted contents to be recommended as target contents, where, the minimum value of the access probability value of the target contents selected is greater than the maximum value of the access probability value of the target contents unselected. Specifically, the recommendation server may sort the contents to be recommended in descending order of the access probability values corresponding to each of the contents to be recommended; then, the recommendation server selects the top N contents from each of the sorted contents to be recommended as the target contents.

Finally, the recommendation server may provide the target contents to the user account. Specifically, the recommendation server may send the content information of the target contents to the user terminal of the user account, so as to provide the target contents to the user account.

In the technical solution of this embodiment, when there is a plurality of contents to be recommended, N contents to be recommended from each of the sorted contents to be recommended are selected as target contents, provided to the user account, where the minimum value of the access probability value of the target contents selected is greater than the maximum value of the access probability value of the target contents unselected. In this way, the target content that is more in line with the personalized preference of the user account may be selected from the plurality of contents to be recommended, and then the target content is provided to the user account to improve the personalized recommendation accuracy of the content recommendation system.

In an embodiment, said providing the content to be recommended to the user account based on the access probability value includes: obtaining a content recommendation threshold corresponding to the user account; and providing the content to be recommended to the user account, in response to determining that the access probability value is greater than the content recommendation threshold.

In the specific implementation, in the process that the recommendation server provides the content to be recommended to the user account based on the access probability value, it specifically includes that: the recommendation server may obtain the content recommendation threshold corresponding to the user account; then, the recommendation server may determine whether the access probability value is greater than the content recommendation threshold. when the recommendation server determines that the access probability value of the user account accessing the content to be recommended is greater than the content recommendation threshold corresponding to the user account, the recommendation server provides the content to be recommended to the user account. Specifically, the recommendation server may send the content information of the content to be recommended to the user terminal of the user account, so as to provide the content to be recommended to the user account. When the recommendation server determines that the access probability value of the user account accessing the content to be recommended is less than or equal to the content recommendation threshold corresponding to the user account, the recommendation server does not provide the content to be recommended to the user account.

For example, when the content recommendation threshold corresponding to user account A is 0.7, and the access probability value of user account A accessing the content B to be recommended is 0.75, then the access probability value is greater than the content recommendation threshold, and the recommendation server may send the content information (such as access links, etc.) of the content B to be recommended to the user terminal of the user account A.

In the technical solution of this embodiment, when the access probability value is greater than the content recommendation threshold, the content to be recommended is provided to the user account, so that the content that meets the personalized preferences of the user account is provided to the user account, and the personalized recommendation accuracy of the content recommendation system is improved.

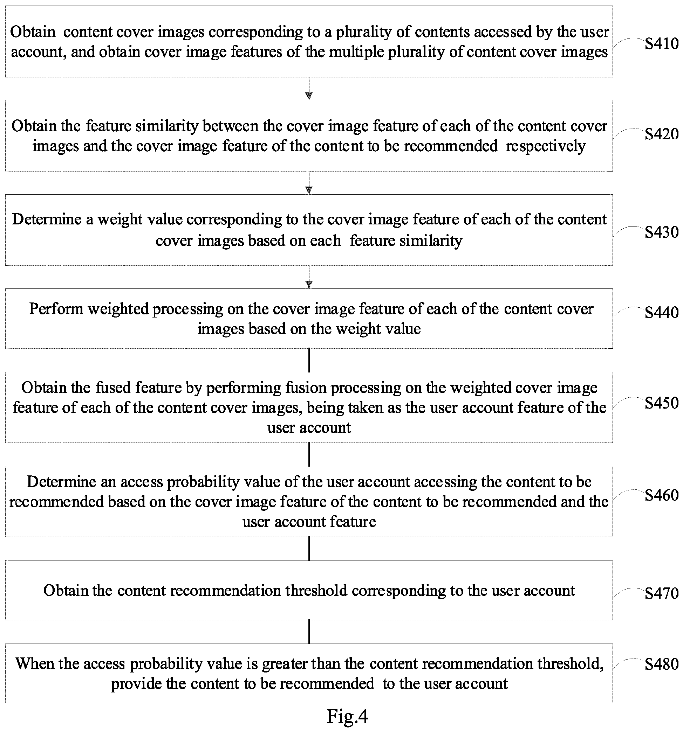

Fig. 4 is a flowchart showing another method for content recommendation according to an embodiment. As shown in Fig. 4, the method may be used in the recommendation server 110 in Fig. 1, and includes the following steps. In S410, content cover images corresponding to a plurality of contents accessed by the user account are obtained, and cover image features of the plurality of content cover images are obtained. In S420, the feature similarity between the cover image feature of each of the content cover images and the cover image feature of the content to be recommended is obtained respectively. In S430, a weight value corresponding to the cover image feature of each of the content cover images is determined based on each feature similarity. In S440, weighted processing is performed on the cover image features of each of the content cover images based on the weight value. In S450, the fused feature is obtained by performing fusion processing on the cover image feature of each of the content cover images, which are used as user account feature of the user account. In S460, an access probability value of the user account accessing the content to be recommended is determined based on the cover image feature of the content to be recommended and the user account feature. In S470, the content recommendation threshold corresponding to the user account is obtained. In S480, when the access probability value is greater than the content recommendation threshold, the content to be recommended is provided to the user account. It should be noted that, for the specific limitations of the above steps, reference may be made to the specific limitations on a method for content recommendation above, which will not be repeated here.

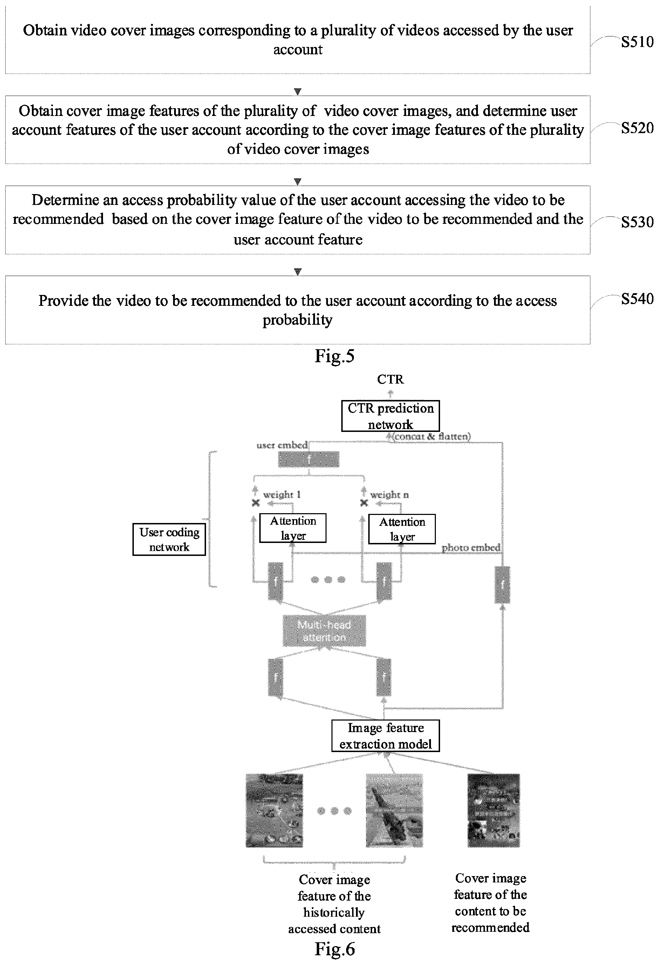

Fig. 5 is a flowchart showing a method for video recommendation according to an embodiment. As shown in Fig. 5, the method can be used in the recommendation server 110 in Fig. 1, and includes the following steps. In S510, video cover images corresponding to a plurality of videos accessed by the user account are obtained. In S520, cover image features of a plurality of the video cover images are obtained, and user account features of the user account are determined according to the cover image features of the plurality of video cover images. In S530, an access probability value of the user account accessing the video to be recommended is determined based on the cover image feature of the video to be recommended and the user account feature. In S540, the video to be recommended is provided to the user account according to the access probability value. It should be noted that, for the specific limitations of the above steps, reference may be made to the specific limitations on a method for content recommendation above, which will not be repeated here.

The above method for video recommendation can accurately encode the user account features used to represent the personalized preferences of the user account based on the image features of the video cover images corresponding to the plurality of videos accessed by the user account, and then can determine the access probability of the user account accessing the video to be recommended based on the account feature of the user account and the cover image feature of the video to be recommended, so that it may be accurately determined that the video to be recommended are recommended to the user account without using the user behavior data accumulated in the video to be recommended.

It should be understood that although the steps in the flowcharts of Figs. 2, 4 and 5 are sequentially displayed in accordance with the arrows, these steps are not necessarily executed in the order indicated by the arrows. Unless explicitly stated herein, the execution of these steps is not strictly limited to the order, and these steps may be performed in other orders. Moreover, at least a part of the steps in Fig. 2, Fig. 4 and Fig. 5 may include a plurality of steps or a plurality of stages, and these steps or stages are not necessarily executed at the same time, but may be executed at different times. Alternatively, the order of execution of the stages is not necessarily sequential, but may be performed alternately or alternately with other steps or at least a portion of the steps or stages in the other steps.

Fig. 6 is a schematic diagram of a network structure of a video recommendation model in a video recommendation scenario, according to an embodiment. First, i cover images of historically clicked videos and the cover images of the videos to be recommended are input respectively into the image feature extraction model, and then the click historical feature feature-i corresponding to the cover images of the historically clicked videos and the candidate feature corresponding the cover images (candidate images) of the videos to be recommended are obtained; a weight weight i is obtained from feature i by passing through an attentionlayer, which reflects the similarity between the cover image of the i-th historical click video and the candidate image. When the similarity is the greater, the contribution of feature_i to the determinination of user_embed is the greater, with the impact of noisy pictures in the click history on the results being reduced. Based on the weight value, weighted processing is performed on each click history feature feature_i; each weighted click history feature feature_i is subjected to fusion processing, as the user account feature of the user account. Then, an access probability value (video click probability) of the user account accessing the videos to be recommended is determined based on the candidate feature corresponding to the cover image of the video to be recommended and the user account feature.

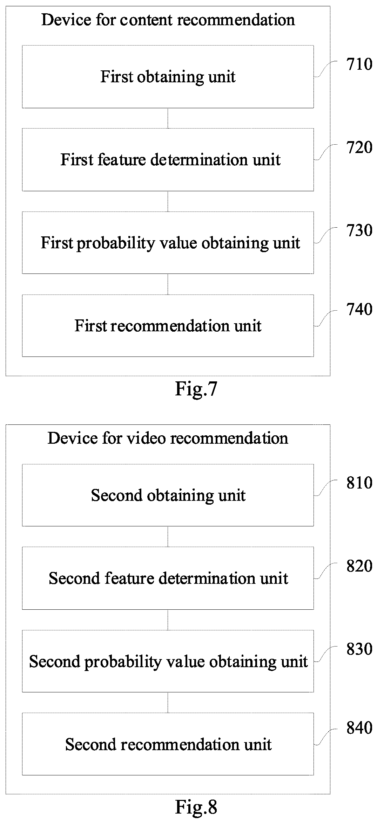

Fig.7 is a block diagram of a device for content recommendation according to an embodiment. Referring to Fig.7, the device includes:
a first obtaining unit 710, configured to perform obtaining a plurality of content cover images corresponding to a plurality of contents accessed by a user account;
a first feature determination unit 720, configured to perform obtaining a plurality of cover image feature of the plurality of content cover images and determining a user account feature of the user account based on the cover image features of the plurality of content cover images;
a first probability value obtaining unit 730, configured to determine an access probability value of the user account accessing a content to be recommended based on the cover image features of the content to be recommended and the user account feature; and
a first recommending unit 740, configured to perform providing the content to be recommended to the user account based on the access probability value.

In an embodiment, the first feature determining unit 720 is specifically configured to perform obtaining a fused feature by performing fusion processing on the cover image feature of the plurality of content cover images; and determining the user account feature of the user account as the fused feature.

In an embodiment, the first feature determination unit 720 is specifically configured to perform obtaining a weight value corresponding to the cover image feature of each of the content cover images; performing weighted processing on the cover image feature of each of the content cover images based on the weight value; and obtaining the fused feature by performing fusion processing on the cover image feature of each of the content cover images.

In an embodiment, the first feature determining unit 720 is specifically configured to execute the method to perform obtaining a feature similarity between the cover image feature of each of the content cover images and the cover image feature of the content to be recommended respectively; and obtaining the weight value corresponding to the cover image feature of each of the content cover images based on each feature similarity.

In an embodiment, the first obtaining unit 710 is specifically configured to perform obtaining initial cover image feature of the plurality of content cover images by performing feature extraction processing on the plurality of content cover images; determining a content similarity between first content and second content based on the initial cover image features of the plurality of content cover images, where the first content and the second content are any two contents in the plurality of contents; and adjusting the initial cover image feature of the first content and the initial cover image feature of the second content, such that the feature similarity obtained after adjustment between the cover image feature of the first content and the cover image feature of the second content is matched with the content similarity.

In an embodiment, there are a plurality of contents to be recommended, and the first recommending unit 740 is specifically configured to perform: sorting the plurality of contents to be recommended according to the access probability value; selecting N contents to be recommended from the sorted plurality of contents to be recommended as target contents, where, the minimum value of the access probability value of the target contents selected is greater than the maximum value of the access probability value of the target contents unselected, and N is a positive integer greater than or equal to 1; and providing the target contents to the user account.

In an embodiment, the first recommending unit 740 is specifically configured to perform obtaining a content recommendation threshold corresponding to the user account; and providing the content to be recommended to the user account, in response to determining that the access probability value is greater than the content recommendation threshold.

Fig. 8 is a block diagram of a device for video recommendation according to an embodiment. Referring to Fig.8, the device includes:
a second obtaining unit 810, configured to perform obtaining a plurality of video cover images corresponding to a plurality of videos accessed by a user account;
a second feature determination unit 820, configured to perform obtaining cover image features of the plurality of video cover images and determining a user account feature of the user account based on the cover image features of the plurality of video cover images;
a second probability value obtaining unit 830, configured to determining an access probability value of the user account accessing a video to be recommended based on the cover image features of the video to be recommended and the user account feature;
a second recommendation unit 840, configured to perform providing the video to be recommended to the user account based on the access probability value.

Regarding the apparatus in the above-mentioned embodiment, the specific manner in which each module performs operations has been described in detail in the embodiment of the method, and will not be described in detail here.

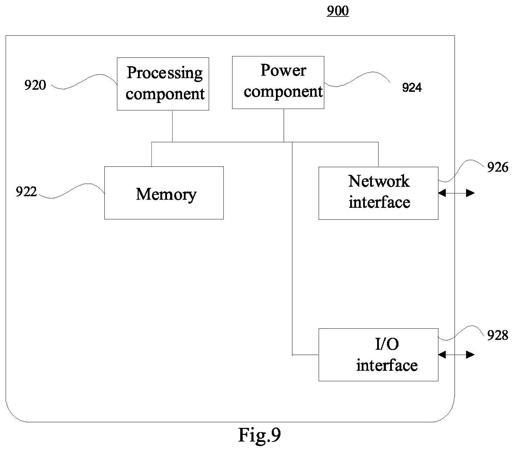

Fig. 9 is a block diagram of an equipment 900 for performing a method for content recommendation and a method for video recommendation according to an embodiment. For example, equipment 900 may be a server. Referring to Fig.9, equipment 900 includes a processing component 920, which further includes one or more processors, and a memory resource, represented by memory 922, for storing instructions executable by processing component 920, such as an application program. The application program stored in memory 922 may include one or more modules, each corresponding to a set of instructions. In addition, the processing component 920 is configured to execute the instructions to perform the method for content recommendation and the method for video recommendation described above.

Equipment 900 may also include a power component 924 configured to perform power management of equipment 900, a wired or wireless network interface 926 configured to connect equipment 900 to a network, and an input output (I/O) interface 928. Equipment 900 may operate an operating system stored in memory 922, such as Window9erverTM, Mac O9 XTM, UnixTM, LinuxTM, FreeB9DTM or the like.

In an embodiment, there is also provided a storage medium including instructions, such as a memory 922 including instructions, which are executable by the processor of the device 900 to execute the above method. The storage medium may be a non-transitory computer-readable storage medium such as ROM, random access memory (RAM), CD-ROM, magnetic tape, floppy disk, optical data storage device, and the like.

All embodiments of the present disclosure can be implemented alone or in combination with other embodiments, which are regarded as the scope of protection required by the present disclosure.

## Claims

1. A method for content recommendation, comprising:
obtaining a plurality of content cover images corresponding to a plurality of contents accessed by a user account;
obtaining a cover image feature of the plurality of content cover images, and determining a user account feature of the user account based on the cover image feature of the plurality of content cover images;
determining an access probability value of the user account accessing a content to be recommended based on the cover image feature of the content to be recommended and the user account feature; and
providing the content to be recommended to the user account based on the access probability value.

2. The method for content recommendation according to claim 1, wherein said determining the user account feature of the user account based on the cover image feature of the plurality of content cover images comprises:
obtaining a fused feature by performing fusion processing on the cover image feature of the plurality of content cover images; and
determining the user account feature of the user account as the fused feature.

3. The method for content recommendation according to claim 2, wherein said obtaining the fused feature by performing the fusion processing on the cover image feature of the plurality of content cover images comprises:
obtaining a weight value corresponding to the cover image feature of each of the content cover images;
performing weighted processing on the cover image feature of each of the content cover images based on the weight value; and
obtaining the fused feature by performing the fusion processing on the cover image feature of each of the content cover images.

4. The method for content recommendation according to claim 3, wherein said obtaining the weight value corresponding to the cover image feature of each of the content cover images comprises:
obtaining a feature similarity between the cover image feature of each of the content cover images and the cover image feature of the content to be recommended respectively; and
determining the weight value corresponding to the cover image feature of each of the content cover images based on each feature similarity.

5. The method for content recommendation according to claim 1, wherein said obtaining the cover image feature of the plurality of content cover images comprises:
obtaining initial cover image feature of the plurality of content cover images by performing feature extraction processing on the plurality of content cover images;
determining a content similarity between a first content and a second content based on the initial cover image feature of the plurality of content cover images, wherein the first content and the second content are any two contents in the plurality of contents; and
adjusting initial cover image feature of the first content and initial cover image feature of the second content, such that a feature similarity obtained after adjustment between the cover image feature of the first content and the cover image feature of the second content is matched with the content similarity.

6. The method for content recommendation according to claim 1, wherein, the content to be recommended comprises a plurality of contents to be recommended, and said providing the content to be recommended to the user account based on the access probability value comprises:
sorting the plurality of contents to be recommended according to the access probability value;
selecting N contents to be recommended from the sorted plurality of contents to be recommended as target contents, wherein, a minimum value of the access probability value of the target contents selected is greater than a maximum value of the access probability value of the target contents unselected, and N is a positive integer greater than or equal to 1; and
providing the target contents to the user account.

7. The method for content recommendation according to claim 1, wherein said providing the content to be recommended to the user account based on the access probability value comprises:
obtaining a content recommendation threshold corresponding to the user account; and
providing the content to be recommended to the user account, in response to determining that the access probability value is greater than the content recommendation threshold.

8. A method for video recommendation, comprising:
obtaining a plurality of video cover images corresponding to a plurality of videos accessed by a user account;
obtaining a cover image feature of the plurality of video cover images, and determining a user account feature of the user account based on the cover image feature of the plurality of video cover images;
determining an access probability value of the user account accessing a video to be recommended based on the cover image feature of the video to be recommended and the user account feature; and
providing the video to be recommended to the user account based on the access probability value.

9. A device for content recommendation, comprising:
a first obtaining unit, configured to perform obtaining a plurality of content cover images corresponding to a plurality of contents accessed by a user account;
a first feature determination unit, configured to perform obtaining a cover image feature of the plurality of content cover images and determining a user account feature of the user account based on the cover image feature of the plurality of content cover images;
a first probability value obtaining unit, configured to determine an access probability value of the user account accessing a content to be recommended based on the cover image feature of the content to be recommended and the user account feature; and
a first recommendation unit, configured to perform providing the content to be recommended to the user account based on the access probability value.

10. The device for content recommendation according to claim 9, wherein the first feature determination unit is specifically configured to perform obtaining a fused feature by performing fusion processing on the cover image feature of the plurality of content cover images; and determining the user account feature of the user account as the fused feature.

11. The device for content recommendation according to claim 10, wherein the first feature determination unit is specifically configured to perform obtaining a weight value corresponding to the cover image feature of each of the content cover images; performing weighted processing on the cover image feature of each of the content cover images based on the weight value; and obtaining the fused feature by performing the fusion processing on the cover image feature of each of the content cover images.

12. The device for content recommendation according to claim 11, wherein the first feature determination unit is specifically configured to perform obtaining a feature similarity between the cover image feature of each of the content cover images and the cover image feature of the content to be recommended respectively; and determining the weight value corresponding to the cover image feature of each of the content cover images based on each feature similarity.

13. The device for content recommendation according to claim 9, wherein the first obtaining unit is specifically configured to perform obtaining initial cover image feature of the plurality of content cover images by performing feature extraction processing on the plurality of content cover images; determining a content similarity between a first content and a second content based on the initial cover image feature of the plurality of content cover images, wherein the first content and the second content are any two contents in the plurality of contents; and adjusting initial cover image feature of the first content and initial cover image feature of the second content, such that a feature similarity obtained after adjustment between the cover image feature of the first content and the cover image feature of the second content is matched with the content similarity.

14. The device for content recommendation according to claim 9, wherein the content to be recommended comprises a plurality of contents to be recommended, and the first recommendation unit is specifically configured to perform sorting the plurality of contents to be recommended according to the access probability value; selecting N contents to be recommended from the sorted plurality of contents to be recommended as target contents, wherein, a minimum value of the access probability value of the target contents selected is greater than a maximum value of the access probability value of the target contents unselected, and N is a positive integer greater than or equal to 1; and providing the target contents to the user account.

15. The device for content recommendation according to claim 9, wherein the first recommendation unit is specifically configured to perform obtaining a content recommendation threshold corresponding to the user account; and providing the content to be recommended to the user account, in response to determining that the access probability value is greater than the content recommendation threshold.

16. A device for video recommendation, comprising:
a second obtaining unit, configured to perform obtaining a plurality of video cover images corresponding to a plurality of videos accessed by a user account;
a second feature determination unit, configured to perform obtaining a cover image feature of the plurality of video cover images and determining a user account feature of the user account based on the cover image feature of the plurality of video cover images;
a second probability value obtaining unit, configured to determining an access probability value of the user account accessing a video to be recommended based on the cover image feature of the video to be recommended and the user account feature; and
a second recommendation unit, configured to perform providing the video to be recommended to the user account based on the access probability value.

17. A server, comprising:
a processor;
a memory, configured to store executable instructions by the processor;
wherein, the processor is configured to execute the instructions to implement a method for content recommendation, the method comprises:
obtaining a plurality of content cover images corresponding to a plurality of contents accessed by a user account;
obtaining a cover image feature of the plurality of content cover images, and determining a user account feature of the user account based on the cover image feature of the plurality of content cover images;
determining an access probability value of the user account accessing a content to be recommended based on the cover image feature of the content to be recommended and the user account feature;
providing the content to be recommended to the user account based on the access probability value.

18. A server, comprising:
a processor;
a memory, configured to store executable instructions by the processor;
wherein, the processor is configured to execute the instructions to implement a method for video recommendation, the method comprises:
obtaining a plurality of video cover images corresponding to a plurality of videos accessed by a user account;
obtaining a cover image feature of the plurality of video cover images, and determining a user account feature of the user account based on the cover image feature of the plurality of video cover images;
determining an access probability value of the user account accessing a video to be recommended based on the cover image feature of the video to be recommended and the user account feature;
providing the video to be recommended to the user account based on the access probability value.

19. A storage medium, when instructions in the storage medium are executed by a processor of a server, the server executes a method for content recommendation, the method comprises:
obtaining a plurality of content cover images corresponding to a plurality of contents accessed by a user account;
obtaining a cover image feature of the plurality of content cover images, and determining a user account feature of the user account based on the cover image feature of the plurality of content cover images;
determining an access probability value of the user account accessing a content to be recommended based on the cover image feature of the content to be recommended and the user account feature;
providing the content to be recommended to the user account based on the access probability value.

20. A storage medium, when instructions in the storage medium are executed by a processor of a server, the server executes a method for video recommendation, the method comprises:
obtaining a plurality of video cover images corresponding to a plurality of videos accessed by a user account;
obtaining a cover image feature of the plurality of video cover images, and determining a user account feature of the user account based on the cover image feature of the plurality of video cover images;
determining an access probability value of the user account accessing a video to be recommended based on the cover image feature of the video to be recommended and the user account feature;
providing the video to be recommended to the user account based on the access probability value.
